# EUROPÄISCHE PATENTSCHRIFT

(11) **EP 1 287 955 B1**
(45) Veröffentlichungstag und Bekanntmachung des Hinweises auf die Patenterteilung: **19.07.2006**
(21) Anmeldenummer: 02016592.4
(22) Anmeldetag: 25.07.2002
(51) Int. Cl.: B27M 1/08, B29C 63/04

(54) **Anlage zum maschinellen Bearbeiten von plattenförmigen Werkstücken aus Holz und/oder Holzersatzstoffen**
Installation for automatically processing panels made of wood and/or wood substitutes
Installation pour le traitement automatique de panneaux en bois et/ou en ersatz de bois

(30) Priorität: 31.08.2001 DE 10142432
(43) Veröffentlichungstag der Anmeldung: 05.03.2003
(73) Patentinhaber: Homag Holzbearbeitungssysteme AG, 72296 Schopfloch (DE)
(72) Erfinder: Götz, Frieder, 77761 Schiltach (DE); Schmid, Johannes, 72181 Starzach, Wachendorf (DE); Kalmbach, Kurt, 72275 Alpirsbach (DE)
(74) Vertreter: Elbertzhagen, Otto

(56) Entgegenhaltungen:
- DE-A- 19 852 633
- DE-U- 8 715 746
- DE-U- 20 014 953
- US-A- 4 169 005

## Beschreibung

Die Erfindung bezieht sich auf eine Anlage der im Gattungsbegriff des Patentanspruchs 1 näher bezeichneten Art.

Eine solche Anlage besteht in bekannter Ausführung aus mehreren voneinander unabhängig arbeitenden Maschinen, welche die einzelnen Bearbeitungseinheiten bilden und die eine oder mehrere Bearbeitungsstationen aufweisen, an denen die Werkstücke im Durchlauf vorbeibefördert werden. Dazu hat jede dieser Maschinen ein eigenes Fördersystem, das unabhängig von den Fördersystemen der anderen Maschinen die Werkstücke im Durchlauf transportiert. In der Regel sind diese Maschinen voneinander räumlich getrennt und durch unabhängige Transportsysteme miteinander verbunden, auf denen die Werkstücke von dem Auslauf der jeweils vorangehenden Maschine zur Einlaufseite der nachfolgenden Bearbeitungsmaschine befördert werden. Hierbei werden sowohl in den Maschinen als auch in den Transportsystemen die Werkstücke mit unterschiedlichen Geschwindigkeiten befördert, was mit davon abhängt, in welchen Abständen die Bearbeitungsmaschinen angeordnet sind.

Bei den bekannten Anlagen müssen die durchlaufenden Werkstücke bei jeder Maschine vor dem Spannen neu ausgerichtet werden, wozu oft ein manueller Eingriff notwendig ist. In jedem Fall erfordert die neue Ausrichtung der Werkstücke zusätzliche Einrichtungen, wie in Durchlaufrichtung angeordnete Führungslineale oder quer dazu einfahrbare Anschlagleisten. Probleme bereitet hier insbesondere die Kaschiermaschine, in der die Werkstücke, die an zumindest einer ihrer Breitseiten beschichtet werden, anders geführt und gespannt werden müssen als es bei denjenigen Maschinen geschieht, bei denen die Werkstücke lediglich im Bereich ihrer in Durchlaufrichtung liegenden Ränder oder Kanten bearbeitet werden.

Das Dokument DE 87 15 746 U1 beschreibt eine Maschine für die Bearbeitung plattenförmiger Werkstücke im Durchlauf, die eine Werkstück-Transporteinrichtung, eine Formatbearbeitungseinrichtung, ein Kantenanleimaggregat und ein Kantennachbearbeitungsaggregat aufweist. Diese Maschine dient zum Aufleimen eines Kantenbandes auf die Schmalseiten der Werkstücke, wobei die Überstände dieses Kantenbandes mittels einem Kantenbündigfräsgerät abgetragen werden.

Das Dokument DE 200 14 953 U1 offenbart eine Maschine, die lediglich zur Nachbearbeitung eines auf die Schmalseiten plattenförmiger Werkstücke aufgebrachten Kantenbandes dient, wobei es in besonderer Weise darum geht, elektrostatische Aufladungen zu vermeiden.

Aus dem Dokument US-A-4,169,005 ist eine Anlage zum Beschichten von plattenförmigen Werkstücken mit einem Kunststofffilm bekannt. Die zu beschichtenden Werkstücke sind bereits formatiert, eine spannehmende Bearbeitung wird folglich an den Werkstücken nicht mehr vorgenommen. Die Werkstücke werden flachliegend auf einer Transportvorrichtung entlang von Bearbeitungsstationen befördert, die ausschließlich darauf ausgerichtet sind, die Werkstücke an ihrer oben liegenden Seite zu bedrucken, mit Kleber zu versehen und mit einem PVC-Film zu beschichten, der noch mit einem auszuhärtenden Schutzfilm überzogen wird. Da eine Kantenbearbeitung an den Werkstücken mit der bekannten Anlage nicht vorgenommen wird, hat man es hier hinsichtlich des vorzunehmenden Filmauftrags mit Bearbeitungsvorgängen zu tun, die nacheinander in einer bestimmten zeitlichen Folge vorgenommen werden müssen. Für solche Fälle ist der kontinuierliche Werkstückdurchlauf durch die Bearbeitungsstationen auf der Transportvorrichtung zweckmäßig.

Der Erfindung liegt die Aufgabe zugrunde, eine Anlage der gattungsgemäßen Art zu schaffen, die eine einheitliche kompakte Maschine darstellt, bei welcher nach dem Aufspannen an der Einlaufseite der Maschine die Werkstücke in unveränderter Ausrichtung die Bearbeitungseinheiten und die Kaschiereinheit bis zur Auslaufseite hin durchlaufen.

Diese Aufgabe wird bei einer Anlage der gattungsbildenden Art nach der Erfindung durch die kennzeichnenden Merkmale des Patentanspruchs 1 gelöst.

Für die Erfindung ist wesentlich, daß unabhängig davon, ob und wie an den einzelnen Bearbeitungsstationen das Spannen der Werkstücke erfolgt, für die Bedienungsperson der Anlage bzw. der Maschine nur eine einmalige Aufgabe der Werkstücke an der Einlaufseite erforderlich ist. Die kompakte Anlage bietet jedoch nicht nur eine Bedienungserleichterung, sie kann auch wesentlich kürzer als die bekannten Anlagen ausgeführt werden. Sowohl für die Bearbeitungseinheiten als auch für die Kaschiereinheit ist die Durchlaufbewegung der Werkstücke synchronisiert, so durchlaufen die Werkstücke die gesamte Kompaktanlage mit einer gleichförmigen, kontinuierlichen Bewegung. Darauf sind die mit der Fördereinrichtung zusammenwirkenden Werkstückspanneinrichtungen abgestellt, was insbesondere auch für die Kaschiereinheit gilt, da hier der Werkstückvorschub auf andere Weise als in den übrigen Bearbeitungseinheiten vorgenommen werden muß.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. Dabei zeigen:
- Fig. 1: in schematischer Darstellung den Aufbau einer Anlage zum Bearbeiten von plattenförmigen Werkstücken im Durchlauf in einer ersten Ausführung mit einer ununterbrochen durchgehenden Werkstücktransportvorrichtung und
- Fig. 2: in gleicher Aufstellung den Aufbau einer solchen Anlage in einer zweiten Ausführung, in der die Werkstücktransportvorrichtung im Bereich der Kaschiereinheit durch ein darin integriertes Vorschub- und Spannsystem fortgesetzt ist.

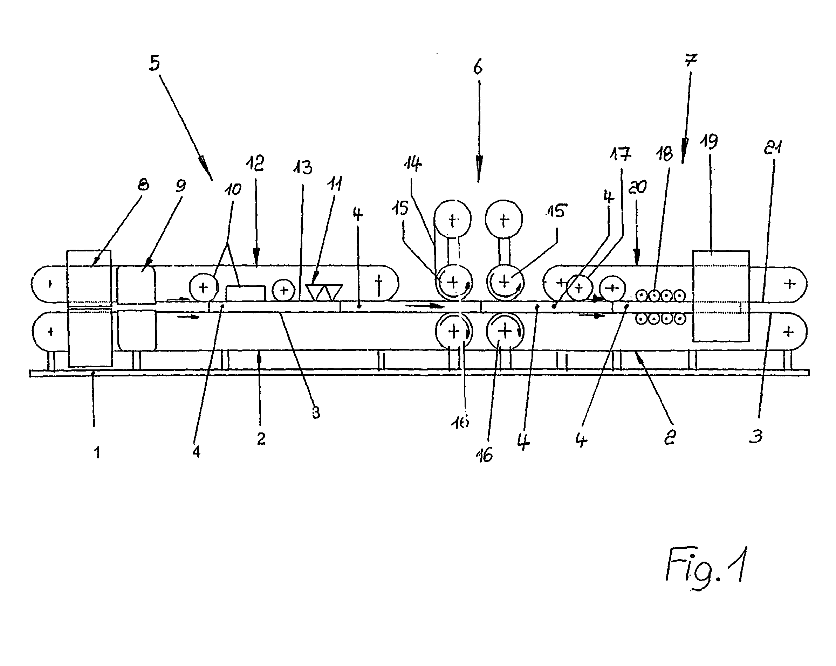

Im einzelnen erkennt man in Fig. 1 ein Maschinenbett 1, auf dem eine Werkstücktransportvorrichtung 2 in Gestalt eines Kettenförderers aufgebaut ist. Eine solche Werkstücktransportvorrichtung 2 hat in der Regel zwei miteinander parallel und synchron laufende Ketten, von denen in der Darstellung das Obertrum 3 angedeutet ist. Auf dem Obertrum 3 der Werkstücktransportvorrichtung 2 werden plattenförmige Werk-stücke 4 flachliegend befördert, wobei sich die Förderrichtung in der gewählten Darstellung von links nach rechts erstreckt. Entsprechend befindet sich die Aufgabeseite für das Auflegen der Werkstücke 4 auf die Werkstücktransportvorrichtung 2 am linken Ende der dargestellten Anlage bzw. Maschine. Grundsätzlich können die durch die Maschine hindurchlaufenden Werkstücke 4 auf der Werkstücktransportvorrichtung 2 in Abstand voneinander angeordnet sein, was erfordert, daß die Werkstücke 4 mit der Werkstücktransportvorrichtung 2 im gesamten Durchlauf so verspannt sind, daß sich eine Zwangsführung von der Einlaufseite der Maschine bis zur Auslaufseite ergibt. Zum anderen können die Werkstücke 4 mit quer zur Durchlaufrichtung liegenden vorderen und rückwärtigen Schmalflächenseiten aneinanderstoßend auf der Werkstücktransportvorrichtung 2 angeordnet sein, wie es in der Zeichnung wiedergegeben ist. Hierbei kann in dafür geeigneten Teilbereichen der Anlage ein Ver-spannen der Werkstücke 4 gegen die Werkstücktransportvorrichtung 2 entfallen, da sich hier die Werkstücke 4 aneinander abstützen.

Die Maschine umfaßt drei Einheiten 5, 6 und 7, an denen an den Werkstücken 4 unterschiedliche Bearbeitungen nacheinander vorgenommen werden. Die erste Bearbeitungseinheit 5 umfaßt eine Formatierungsstation 8, die Fläs- oder Sägeaggregate aufweist, um die plattenförmigen Werkstücke auf eine vorgesehene Breite zuschneiden zu können. An die Formatierungsstation 8 schließt sich eine Station 9 zur Kantenprofilierung an, hier sind sogenannte Kantenfräsaggregate vorhanden, mit denen die in Durchlaufrichtung liegenden Werkstückkanten profiliert werden. Weiter weist die Bearbeitungseinheit 5 eine Station 10 zum Reinigen und Vorwärmen der Werkstücke 4 auf, an die sich eine Vorverdichtungsstation 11 anschließt. Diese Vorverdichtungsstation 11 wird insbesondere dann vorgesehen, wenn die Werkstücke 4 aus einem Spanplattenmaterial bestehen, bei dem an den angeschnittenen Flächen grobe Porenstrukturen zu Tage treten, die durch Einfüllen eines Verdichtungsklebers geglättet werden müssen, damit beim nachfolgenden Kaschieren der Werkstücke über diese Schnittflächen hinweg die Porenstruktur sich nicht durch das Beschichtungsmaterial hindurchdrückt.

Die erste Bearbeitungseinheit 5 hat eine Werkstückspannvorrichtung 12 in Gestalt eines Oberdrucks, der mit seinem Untertrum 13 die Werkstücke 4 an der Oberseite beaufschlagt und somit die auf der Werkstücktransportvorrichtung 2 aufliegenden Werkstücke 4 gegen deren Obertrum 3 verspannt.

Unmittelbar an die Bearbeitungseinheit 5 schließt in Durchlaufrichtung eine Kaschiereinheit 6 an, in der ein bahnförmiges Beschichtungsmaterial 14, wie eine Dekor folie, zumindest auf die obenliegende Seite der Werkstücke 4 im Durchlauf aufgebracht wird. Dies geschieht mittels Andruckwalzen 15, die eine der Fördergeschwindigkeit der Werkstücke 4 entsprechende Umfangsgeschwindigkeit haben und angetrieben sein können. Beim Ausführungsbeispiel sind zwei solcher Andruckwalzen 15 wiedergegeben, von denen die zweite lediglich für das Anpressen des Beschichtungsmaterials 14 an die Oberseiten der Werkstücke 4 sorgt. Gegenüber den oberen Andruckwalzen 15 sind die Werkstücke 4 an ihren untenliegenden Breitseiten durch Gegendruckwalzen 16 beaufschlagt, die ein Durchwölben der plattenförmigen Werkstücke 4 verhindern und entsprechend zwischen den beiden Ketten des die Werkstücktransportvorrichtung 2 bildenden Kettenförderers angeordnet sind. In gleicher Weise wie der Oberdruck 12 der Bearbeitungseinheit 5 sorgen die oberen Andruckwalzen 15 der Kaschiereinheit 6 dafür, daß die Werkstücke 4 auf der Werkstücktransportvorrichtung 2 niedergehalten werden.

An die Kaschiereinheit 6 schließt eine Nachbearbeitungseinheit 7 an, die als erstes in Durchlaufrichtung eine Station 17 zum Nachverdichten der kaschierten Werkstücke 4 aufweist. Danach passieren die Werkstücke 4 eine Station 18 zum Nachverformen des auf die Werkstücke 4 aufgetragenen Beschichtungsmaterials 14. Damit können zugleich auch die profilierten und gegebenenfalls verdichteten, in Durchlaufrichtung liegenden Kanten der Werkstücke 4 kaschiert werden. Dazu trägt man das Beschichtungsmaterial 14 der Kaschiereinheit mit einer Breite auf die Werkstücke 4 auf, die größer als die Breite der Werkstücke 4 quer zur Durchlaufrichtung ist. Entsprechend können die Überstände des Kaschiermaterials 14 mittels Andruckrollen an die ebenfalls zu beschichtenden Werkstückränder angefahren werden. Dabei lassen sich Überstände des Beschichtungsmaterials an den Werkstückkanten nicht vermeiden, die deshalb besäumt werden müssen. Dazu weist die Nachbearbeitungseinheit 7 ferner nahe der Auslaufseite der Anlage eine Besäumstation 19 auf, die mit Fräs- oder Schleifaggregaten bestückt ist, welche die störenden Überstände des Beschichtungsmaterials 14 an den Werkstückkanten abtragen.

In gleicher Weise wie die erste Bearbeitungseinheit 5 werden bei der Nachbearbeitungseinheit 7 die Werkstücke 4 gegen das Obertrum 3 der Werkstücktransportvorrichtung 2 mittels eines Oberdrucks 20 verspannt, der mit seinem Untertrum 21 die Werkstückoberseiten beaufschlagt.

Die Werkstücktransportvorrichtung 2 erstreckt sich durch die gesamte Maschine von der Einlaufseite der Werkstücke 4 bis zu deren Auslaufseite hindurch. So ist der entsprechende Kettenförderer durch die erste Bearbeitungseinheit 5, durch die Kaschiereinheit 6 und durch die Nachbearbeitungseinheit 7 bindurchgeführt. Die Werkstücke 4 werden darauf mit gleichförmiger Geschwindigkeit befördert, und darauf sind die Wälzgeschwindigkeiten des Oberdrucks 12 der Bearbeitungseinheit 5, des Oberdrucks 20 der Nachbearbeitungseinheit 7 und der Andruckwalzen 15 sowie gegebenenfalls die der Gegenwalzen 16 der Kaschiereinheit 6 abgestimmt.

Die Werkstücke 4 können auf der Werkstücktransportvorrichtung 2 von der Einlaufseite der Maschine bis zu deren Auslaufseite hin zwangsgeführt sein, was bedeutet, daß der Oberdruck 12 der ersten Bearbeitungseinheit 5 die Werkstücke 4 erst dann aus der Spannlage freigibt, nachdem die erste Andruckwalze 15 der Kaschiereinheit 6 das jeweilige Werkstück 4 an dem auflaufenden Ende gegen die Werkstücktransportvorrichtung 2 verspannt hat. In gleicher Weise gibt die in Durchlaufrichtung hintere Andruckwalze 15 der Kaschiereinheit 6 das gespannte Werkstück 4 erst dann frei, nachdem der Oberdruck 20 der Nachbearbeitungseinheit 7 die Verspannung gegen die Werkstücktransportvorrichtung 2 vorgenommen hat.

Dort wo ein Niederhalten der Werkstücke auf der Werkstücktransportvorrichtung 2 entgegen Bearbeitungskräften nicht erforderlich ist, kann ein Verspannen der Werkstücke 4 entfallen. Dies ist vor allem möglich, sofern, wie in der Zeichnung dargestellt, die Werkstücke mit ihren vorderen und hinteren quer zur Durchlaufrichtung liegenden Schmalflächenseiten aneinanderstoßen. Denn hierbei verlieren die Werkstücke 4 die ihnen gegebene Ausrichtung an der Einlaufseite der Maschine bei fehlender Verspannung nicht, weil sich die aneinanderstoßenden Werkstücke 4 gegenseitig abstützen. Auf diese Weise können die Werkstücke durch die Kaschiereinheit 6 durchgeschoben werden.

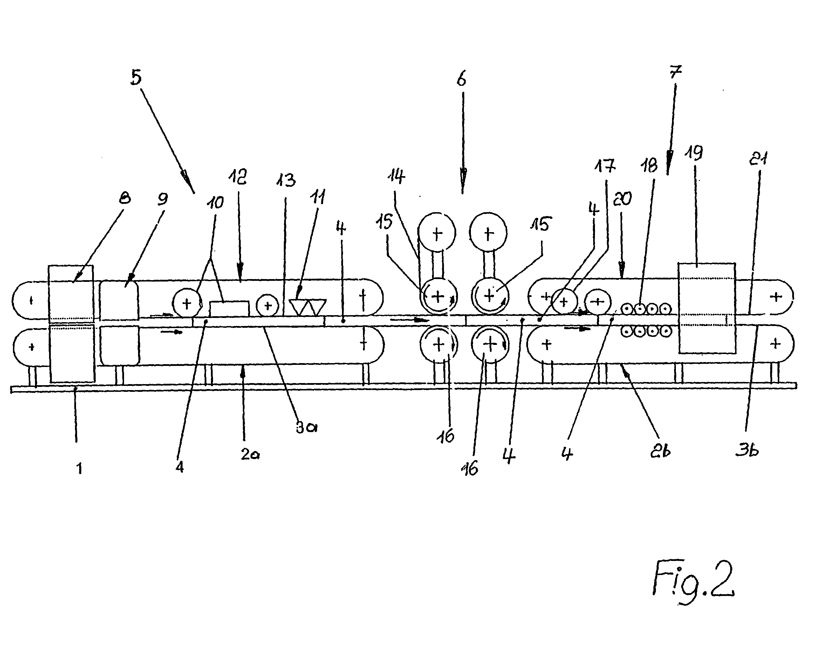

Nach dem Ausführungsbeispiel von Fig. 2 ist die Werkstücktransportvorrichtung 2 im Bereich der Kaschiereinheit 6 unterbrochen und bildet somit in Durchlaufrichtung gesehen vor der Kaschiereinheit einen ersten Abschnitt 2a mit einem Obertrum 3a und hinter der Kaschiereinheit 6 einen zweiten Abschnitt 2b mit einem Obertrum 3b. Die Abschnitte 2a, 3a und 2b, 3b der Werkstücktransportvorrichtung laufen selbstverständlich auch hier synchron miteinander und die Stabilisierung der Werkstücke 4 in ihrer einmal vorgegebenen Ausrichtung wird hierbei durch das in der Kaschiereinheit 6 auf die Werkstückoberseiten aufgetragene, bahnförmige Beschichtungsmaterial 14 unterstützt. Dies gilt gleichermaßen auch bei ununterbrochener Werkstücktransportvorrichtung 2, wie es Fig. 1 zeigt. Die Trennung der einzelnen Werkstücke 4, die zunächst durch das bahnförmige Beschichtungsmaterial 14 noch am Auslauf der Nachbearbeitungseinheit 7 miteinander verbunden sind, erfolgt an einer nachgeordneten Station, die in der Zeichnung nicht wiedergegeben ist. Wichtig ist auch hier, daß die Werkstücke 4 in einem einzigen Durchlauf durch die kompakte Maschine von der Formatierung bis zur nachbearbeiteten Beschichtung komplett bearbeitet werden, und in zwar in einem kontinuierlichen ununterbrochenen Durchgang durch die Bearbeitungseinheiten 5 und 7 und durch die Kaschiereinheit 6 hindurch. In letzterer wird die Werkstücktransportvorrichtung 2 durch die die Werkstücke 4 unterstützenden Gegendruckwalzen 16 fortgesetzt, deren oberer Scheitel niveaugleich mit der Werkstücktransportvorrichtung 2 ist.

## Patentansprüche

1. Anlage zur maschinellen Bearbeitung von plattenförmigen Werkstücken (4) aus Holz und/oder Holzersatzstoffen für den Möbel- oder Innenausbau mit einer ersten Bearbeitungseinheit (5) zur spangebenden Bearbeitung der Werkstücke (4) im Durchlauf, nämlich zum Formatieren und/oder zum Profilieren der in Durchlaufrichtung liegenden Werkstückkanten, ferner mit einer Kaschiereinheit (6) zum Beschichten der spangebend bearbeiteten Werkstücke (4) an zumindest einer Breitseite im Durchlauf und mit einer Nachbearbeitungseinheit (7) zur Bearbeitung der kaschierten Werkstücke (4) im Durchlauf, nämlich zur Nachbehandlung des Beschichtungsmaterials an den Werkstücken und zum Nachbearbeiten der in Durchlaufrichtung liegenden Werkstückkanten,
**dadurch gekennzeichnet,**
**daß** die Bearbeitungseinheit (5), die Kaschiereinheit (6) und die Nachbearbeitungseinheit (7) an einer durch diese Einheiten (5 - 7) hindurchführenden, gemeinsamen Werkstücktransportvorrichtung (2) in deren Förderrichtung aneinander anschließend angeordnet sind, auf der die Werkstücke (4) aufliegend transportiert werden, und daß die Einheiten (5 - 7) je für sich Werkstückspannvorrichtungen (12, 15, 20) aufweisen, die synchron mit der Werkstücktransportvorrichtung (2) mitlaufen und die Werkstücke (4) auf der Werkstücktransportvorrichtung (2) niederhalten, wobei die Kaschiereinheit (6) zumindest eine die Werkstücke (4) an ihren Oberseiten beaufschlagende Andruckwalze (15) hat, die im Bereich der Kaschiereinheit (6) deren mit der Werkstücktransportvorrichtung (2) synchron mitlaufende Werkstückspannvorrichtung bildet.

2. Anlage nach Anspruch 1,
**dadurch gekennzeichnet,**
**daß** die Bearbeitungseinheit (5), die Kaschiereinheit (6), die Nachbearbeitungseinheit (7) und die Werkstücktransportvorrichtung (2) auf einem gemeinsamen Maschinenbett (1) aufgebaut sind.

3. Anlage nach Anspruch 2,
**dadurch gekennzeichnet,**
**daß** das Maschinenbett (1) in der Durchlaufrichtung in miteinander verbundene Module unterteilt ist.

4. Anlage nach einem der Ansprüche 1 - 3,
**dadurch gekennzeichnet,**
**daß** die Werkstücktransportvorrichtung (2) ein Kettenförderer mit zwei zueinander parallelen, in Abstand voneinander angeordneten Förderketten ist.

5. Anlage nach einem der Ansprüche 1 - 4,
**dadurch gekennzeichnet,**
**daß** die Werkstückspannvorrichtungen (12 u. 20) der ersten Bearbeitungseinheit (5) und der Nachbearbeitungseinheit (7) je aus einem Oberdruck bestehen, der mit seinem Untertrum (13, 21) die auf der Werkstücktransportvorrichtung (2) aufliegenden Werkstükke (4) an deren Oberseite beaufschlagt.

6. Anlage nach Anspruch 1,
**dadurch gekennzeichnet,**
**daß** mit der zumindest einen Andruckwalze (15) ein bahnförmiges Beschichtungsmaterial (14) auf die Oberseiten der Werkstücke (4) aufgebracht wird.

7. Anlage nach Anspruch 1 - 6,
**dadurch gekennzeichnet,**
**daß** die Kaschiereinheit (6) zumindest eine die Unterseiten der Werkstücke (7) beaufschlagende Gegendruckwalze (16) aufweist.

8. Anlage nach einem der Ansprüche 1 - 7,
**dadurch gekennzeichnet,**
**daß** die Werkstücktransportvorrichtung (2) in Durchlaufrichtung gesehen in einen vor der Kaschiereinheit (6) liegenden Abschnitt (2a, 3a) und in einen hinter der Kaschiereinheit (6) angeordneten Abschnitt (2b, 3b) unterteilt ist und die zumindest eine Gegendruckwalze (16) der Kaschiereinheit (6 ) den zwischen den Abschnitten (2a, 3a) und (2b, 3b) der Werkstücktransportvorrichtung (2) fehlenden Abschnitt ersetzt.

9. Anlage nach einem der Ansprüche 1 - 8,
**dadurch gekennzeichnet,**
**daß** die Andruckwalze (15) und/oder die Gegendruckwalze (16) der Kaschiereinheit (6) mit einer der Fördergeschwindigkeit der Werkstücktransportvorrichtung (2) entsprechenden Umfangsgeschwindigkeit angetrieben sind.

10. Anlage nach einem der Ansprüche 1 - 9,
**dadurch gekennzeichnet,**
**daß** in Durchlaufrichtung gesehen die jeweils vorangehende Werkstückspannvorrichtung (12, 15) das jeweils durchlaufende Werkstück (4) erst freigibt, nachdem die nachfolgende Werkstückspannvorrichtung (15, 20) das Werkstück (4) gegen die Werkstücktransportvorrichtung (2) verspannt hat.

11. Anlage nach einem der Ansprüche 1 - 10,
**dadurch gekennzeichnet,**
**daß** die Werkstücke (4) beim Transport auf der durch die gesamte Anlage durchgehenden Werkstücktransportvorrichtung (2) mit ihren quer zur Durchlaufrichtung liegenden vorderen und rückwärtigen Schmalflächenseiten aneinanderstoßend angeordnet sind.

12. Anlage nach einem der Ansprüche 1 - 11,
**dadurch gekennzeichnet,**
**daß** die erste Bearbeitungseinheit (5) in Durchlaufrichtung gesehen im Anschluß an die Station (9) zur Kantenprofilierung der Werkstücke (4) eine Reinigungs- und Vorwärmstation (10) aufweist.

13. Anlage nach Anspruch 12,
**dadurch gekennzeichnet,**
**daß** an die Reinigungs- und Vorwärmstation (10) eine Vorverdichtungsstation (11) anschließt, an der ein Verdichtungskleber in die bei der vorangegangenen Bearbeitung durch Anschnitt freigelegten Poren an den betreffenden Schnittflächen der Werkstücke (4) eingebracht wird.

14. Anlage nach einem der Ansprüche 1 - 13,
**dadurch gekennzeichnet,**
**daß** im Anschluß an die Kaschiereinheit (6) die Nachbearbeitungseinheit (7) eine Station (17) zum Nachverdichten der beschichteten Werkstücke (4) aufweist.

15. Anlage nach einem der Ansprüche 1 - 14,
**dadurch gekennzeichnet,**
**daß** die Nachbearbeitungseinheit (7) eine Station (18) zum Nachverformen über die Breitseiten der Werkstücke überstehender Ränder des Beschichtungsmaterial sowie zum Anfahren dieser Ränder an die profilierten Werkstückkanten aufweist.

16. Anlage nach Anspruch 15,
**dadurch gekennzeichnet,**
**daß** in der Bearbeitungseinheit (7) an die Station (18) zum Nachverformen eine Besäumstation (19) anschließt, in der an den Werkstückkanten überstehende Randabschnitte der daran angefahrenen Ränder des Beschichtungsmaterials abgetragen werden.

## Claims

1. Installation for automatically processing panels (4) made of wood and/or wood substitutes for the furniture and interior fittings industry with a first machining unit (5) for chipping the workpieces (4) in the processing path, namely for formatting and/or for profiling the workpiece edges lying in the processing path direction, furthermore with a laminating unit (6) for coating the chip-machined workpieces (4) on at least one broad side in the processing path and with a secondary finishing unit (7) for processing the laminated workpieces (4) in the processing path, namely for the subsequent treatment of the coating material on the workpieces and for finishing off the workpiece edges lying in the processing path direction,
**characterised in that**
the machining unit (5), the laminating unit (6) and the secondary finishing unit (7) are arranged in succession in their conveying direction on a common workpiece transport device (2) which passes through these units (5-7) and on which the workpieces (4) are transported lying down thereon, and that the units (5-7) each have workpiece clamping devices (12, 15, 20) for same which move along synchronously with the workpiece transport device (2) and hold the workpieces (4) down on the workpiece transport device (2) whereby the laminating unit (6) has at least one contact pressure roller (15) bearing on the top sides of the workpieces (4) and forming in the region of the laminating unit (6) the workpiece clamping device which runs along synchronously with the workpiece transport device (2).

2. Installation according to claim 1,
**characterised in that**
the machining unit (5), the laminating unit (6), the secondary finishing unit (7) and the workpiece transport device (2) are mounted on a common machine bed (1).

3. Installation according to claim 2,
**characterised in that**
the machine bed (1) is- divided in the processing path direction into interconnected modules.

4. Installation according to one of claims 1 - 3,
**characterised in that**
the workpiece transport device (2) is a chain conveyor with two conveyor chains mounted parallel to one another at a distance from one another.

5. Installation according to one of claims 1 - 4,
**characterised in that**
the workpiece clamping devices (12 and 20) of the first machining unit (5) and the secondary finishing unit (7) each comprise an upper press which with its lower side (13, 21) bears on the top side of the workpieces (4) lying on the workpiece transport device (2).

6. Installation according to claim 1,
**characterised in that**
a strip-like covering material (14) is applied by at least one contact pressure roller (15) onto the top sides of the workpieces (4).

7. Installation according to claims 1 - 6,
**characterised in that**
the laminating unit (6) has at least one counter pressure roller (16) which bears on the underneath sides of the workpieces (7).

8. Installation according to one of claims 1 - 7,
**characterised in that**
the workpiece transport device (2) seen in the processing path direction is divided into a section (2a, 3a) lying in front of the laminating unit (6) and into a section (2b, 3b) mounted behind the laminating unit (6) and the at least one counter pressure roller of the laminating unit (6) replaces the section which is missing between the sections (2a, 3a) and (2b, 3b) of the workpiece transport device (2).

9. Installation according to one of claims 1 - 8,
**characterised in that**
the contact pressure roller (15) and/or the counter pressure roller (16) of the laminating unit (6) are driven with a circumferential speed which corresponds to the conveying speed of the workpiece transport device (2).

10. Installation according to one of claims 1 - 9,
**characterised in that**
seen in the processing path direction the relevant preceding workpiece clamping device (12, 15) only releases the relevant workpiece (4) passing through after the following workpiece clamping device (15, 20) has clamped the workpiece (4) against the workpiece transport device (2).

11. Installation according to one of claims 1 - 10,
**characterised in that**
the workpieces (4) during transport on the workpiece transport device (2) which is passing through the entire installation are mounted abutting one another by their front and rear narrow flat sides which lie across the processing path direction.

12. Installation according to one of claims 1 - 11,
**characterised in that**
the first machining unit (5) seen in the processing path direction has a cleaning and pre-heating station (10) following the station (9) for the edge-profiling of the workpieces (4).

13. Installation according to claim 12,
**characterised in that**
the cleaning and preheating station (10) is adjoined by a pre-compacting station (11) where a compacting adhesive is introduced into the pores on the relevant cut faces of the workpieces (4) which have become exposed during the preceding cutting operation.

14. Installation according to one of claims 1 - 13,
**characterised in that**
following the laminating unit (6) the secondary finishing unit (7) has a station (17) for after-compacting the coated workpieces (4).

15. Installation according to one of claims 1 - 14,
**characterised in that**
the secondary finishing unit (7) has a station (18) for post-forming the edges of the coating material protruding over the broad sides of the workpieces as well as for bringing these edges onto the profiled workpiece edges.

16. Installation according to claim 15,
**characterised in that**
in the machining unit (7) adjoining the station (18) for post-forming there is a trimming station (19) in which the marginal sections of the edges of the covering material which have been brought round and protrude beyond the workpiece edges are removed.

## Revendications

1. Installation pour le traitement automatique de pièces en forme de panneaux (4) en bois et / ou en matériaux de remplacement de bois pour la fabrication de meubles ou pour l'aménagement intérieur, avec une première unité de traitement (5) pour le traitement en continu des pièces (4) par enlèvement de copeaux en l'occurrence: mise en forme et / ou profilage des chants des pièces orientés dans la direction de passage, en outre avec une unité de placage (6) pour le revêtement des pièces (4) traitées en continu, avec dégagement de copeaux, au moins sur un côté large, et avec une unité de finition (7) pour le traitement en continu des pièces (4) revêtues, c.-à-d. pour la finition du matériau de revêtement sur les pièces et pour la finition des chants des pièces orientés dans la direction de passage,
**caractérisée en ce que**
l'unité de traitement (5), l'unité de placage (6) et l'unité de finition (7) sont disposées en file, dans la direction de déplacement d'un dispositif de transport de pièces (2) commun, traversant lesdites unités (5 à 7), sur lequel sont posées les pièces (4), et **en ce que** les unités (5 à 7) présentent chacune des dispositifs de serrage de pièces (12, 15, 20) qui se déplacent de manière synchrone par rapport au dispositif de transport des pièces (2), et maintiennent lesdites pièces (4) pressées sur le dispositif de transport de pièces (2), l'unité de placage (6) possédant au moins un rouleau de pression (15) qui, agissant sur les faces supérieures des pièces (4), forme, dans la zone de l'unité de placage (6), le dispositif de serrage de pièces qui se déplace de manière synchrone avec celle-ci.

2. Installation selon la revendication 1,
**caractérisée en ce que**
l'unité de traitement (5), l'unité de placage (6), l'unité de finition (7) et le dispositif de transport de pièces (2) sont installés sur un socle de machine (1) commun.

3. Installation selon la revendication 2,
**caractérisée en ce que** le socle de machine (1) est divisé, dans le sens de passage, en modules qui sont reliés entre eux.

4. Installation selon l'une des revendications 1 - 3,
**caractérisée en ce que**
le dispositif de transport de pièces (2) est un transporteur à chaînes pourvu de deux chaînes de transport disposées parallèlement à distance l'une de l'autre.

5. Installation selon l'une des revendications 1 - 4,
**caractérisée en ce que**
les dispositifs de serrage de pièces (12 et 20) de la première unité de traitement (5) et de l'unité de finition (7) consistent chacun en un dispositif supérieur de pression qui agit avec sa portée inférieure (13, 21) sur la face supérieure des pièces (4) posées sur le dispositif de transport de pièces (2).

6. Installation selon la revendication 1,
**caractérisée en ce que**
un matériau de revêtement (14) en forme de bande est appliqué sur les faces supérieures des pièces (4) au moyen d'au moins un rouleau de pression (15).

7. Installation selon l'une des revendications 1 - 6,
**caractérisée en ce que**
l'unité de placage (6) présente au moins un rouleau de contre-pression (16) qui agit sur les faces inférieures des pièces (4).

8. Installation selon l'une des revendications 1 - 7,
**caractérisée en ce que**
le dispositif de transport de pièces (2), vu dans la direction de passage, est divisé en une section (2a, 3a) située en amont de l'unité de placage (6) et une section (2b, 3b) située en aval de l'unité de placage (6), et le rouleau de contre-pression (16) au moins prévu de l'unité de placage (6) remplace la section manquante entre les sections (2a, 3a) et (2b, 3b) du dispositif de transport de pièces (2).

9. Installation selon l'une des revendications 1 - 8,
**caractérisée en ce que**
le rouleau de pression (15) et / ou le rouleau de contre-pression (16) de l'unité de placage (6) sont entraînés à une vitesse périphérique qui correspond à la vitesse d'amenée du dispositif de transport de pièces (2).

10. Installation selon l'une des revendications 1 - 9,
**caractérisée en ce que**
le rouleau de pression (15) et / ou le rouleau de contre-pression (16) de l'unité de placage (6) sont entraînés à une vitesse périphérique qui correspond à la vitesse d'amenée du dispositif de transport de pièces (2).

11. Installation selon l'une des revendications 1 - 10,
**caractérisée en ce que**,
lors du transport des pièces (4) sur le dispositif de transport de pièces (2) traversant la totalité de l'installation, les surfaces des côtés étroits antérieurs et postérieurs des dites pièces (4) sont disposées bout à bout.

12. Installation selon l'une des revendications 1 - 11,
**caractérisée en ce que**
la première unité de traitement (5), vue dans la direction de passage, présente, à la suite du poste de profilage (9) des chants des pièces (4), un poste de nettoyage et de préchauffage (10).

13. Installation selon la revendication 12,
**caractérisée en ce que** le poste de nettoyage et de préchauffage (10) est suivi d'un poste de pré-densification (11) où une colle de densification est appliquée dans les pores mis à jour par entamure dans les surfaces de coupe correspondantes des pièces (4) lors du traitement précédent.

14. Installation selon l'une des revendications 1 - 13,
**caractérisée en ce que**
l'unité de finition (7) présente, à la suite de l'unité de placage (6), un poste (17) pour la post-densification des pièces (4) revêtues.

15. Installation selon l'une des revendications 1 - 14,
**caractérisée en ce que**
l'unité de post-traitement (7) présente un poste (18) pour le post-formage des bords du matériau de revêtement en saillie au-delà des côtés larges des pièces, ainsi que pour l'amenée de ces bords sur les chants profilés des pièces.

16. Installation selon la revendication 15,
**caractérisée en ce que**
dans l'unité de finition (7), le poste de post-formage (18) est suivi d'un poste de rognage (19) dans lequel sont éliminées les sections marginales des bords de matériau de revêtement en saillie des chants des pièces qui défilent.
